# FASCICULE DE BREVET EUROPEEN

(11) **EP 3 661 702 B1**
(45) Date de publication et mention de la délivrance du brevet: **19.10.2022**
(21) Numéro de dépôt: 18742527.7
(22) Date de dépôt: 25.07.2018
(51) Int. Cl.: B25J 9/16, B25J 9/00

(54) **PROCEDE D'ASSISTANCE D'AU MOINS UN MOUVEMENT D'UN UTILISATEUR ET DISPOSITIF CORRESPONDANT**
VERFAHREN ZUR UNTERSTÜTZUNG VON MINDESTENS EINER BEWEGUNG EINES BENUTZERS UND ENTSPRECHENDE VORRICHTUNG
METHOD FOR ASSISTING AT LEAST ONE MOVEMENT OF A USER AND CORRESPONDING DEVICE

(30) Priorité: 31.07.2017 FR 1757280
(43) Date de publication de la demande: 10.06.2020
(73) Titulaire: Safran Electronics & Defense, 92100 Boulogne-Billancourt (FR)
(72) Inventeur: ATTAL, Hugo, 77550 MOISSY-CRAMAYEL (FR); THIEFFRY, Roland, 77550 MOISSY- CRAYAMEL (FR); GRENIER, Jordane, 77550 MOISSY-CRAYAMEL (FR)
(74) Mandataire: Decorchemont, Audrey Véronique Christèle
(86) Numéro de dépôt international: PCT/EP2018/070225
(87) Numéro de publication internationale: WO 2019/025266

(56) Documents cités:
- US-A1- 2015 217 444
- US-A1- 2017 165 833

## Description

L'invention concerne un procédé d'assistance d'au moins un mouvement d'un utilisateur. L'invention concerne également un dispositif correspondant.

### ARRIERE PLAN TECHNOLOGIQUE DE L'INVENTION

Les dispositifs robotiques peuvent permettre aujourd'hui d'assister le mouvement d'un utilisateur dans de nombreux domaines comme le médical, la sécurité nationale ... On connaît ainsi des exosquelettes portés par l'utilisateur et participant à ses mouvements pour lui faciliter la réalisation de tâches comme le port d'un objet, la poussée ou le tirage d'un objet ... Un exosquelette permet de décupler artificiellement les forces de l'utilisateur et ainsi de limiter sa fatigue.

Afin qu'un exosquelette puisse aider efficacement un utilisateur, il est cependant nécessaire de connaître les efforts extérieurs appliqués comme la masse des objets transportés. Il convient en effet de pouvoir commander l'exosquelette pour qu'il puisse automatiquement compenser ces efforts le plus précisément et rapidement possible.

Usuellement, on estime les efforts extérieurs via des éléments indicateurs supplémentaires agencés dans l'environnement ou sur l'exosquelette (caméra, technologie de radio-identification plus connue sous l'acronyme anglais RFID, jauges de contraintes ...) mais également liés à l'utilisateur (technologie myo-électrique, interface utilisateur-environnement ...).

Ceci oblige donc à ce que l'utilisateur porte directement des capteurs et/ou interagisse avec une interface rendant moins ergonomique le port de l'exosquelette.

Par ailleurs, l'utilisation de l'exosquelette est cantonnée à des applications peu complexes comme par exemple une application statique en usine permettant une pose plus aisée de marqueurs, typiquement pour renseigner de façon automatique la masse et les propriétés physiques d'un objet à porter.

### OBJET DE L'INVENTION

Un but de l'invention est de proposer un procédé d'assistance d'au moins un mouvement de l'utilisateur qui soit plus ergonomique pour l'utilisateur.

Un but de l'invention est également de proposer un dispositif correspondant.

### BREVE DESCRIPTION DE L'INVENTION

En vue de la réalisation de ce but, on propose un procédé d'assistance d'au moins un mouvement d'un utilisateur par l'intermédiaire d'un dispositif robotique, le procédé permettant de faire fonctionner le dispositif robotique au moins dans les deux modes suivants :
- Mode par défaut : asservissement en effort du dispositif robotique via un calculateur du dispositif robotique,
- Mode de mesure : asservissement en trajectoire du dispositif robotique, via le calculateur, et enregistrement dans le calculateur d'au moins un effort exercé sur le dispositif robotique par un environnement externe audit dispositif robotique,
le procédé étant défini pour,
lors d'une reconnaissance par le calculateur d'un mouvement effectué par le dispositif robotique, basculer du mode par défaut au mode de mesure pour enregistrer au moins un effort exercé sur le dispositif robotique par un environnement extérieur au dispositif robotique, puis
revenir au mode par défaut en s'aidant dudit effort enregistré pour mettre en œuvre l'asservissement en effort dudit mode par défaut.

De la sorte, l'invention permet de basculer régulièrement entre un asservissement en trajectoire et un asservissement en effort, l'asservissement en trajectoire permettant ainsi temporairement de pouvoir renseigner le calculateur sur le ou les efforts extérieurs appliqués sur le dispositif robotique et l'asservissement en effort permettant d'assister l'utilisateur dans son mouvement. Ceci permet donc de participer au bon fonctionnement du dispositif robotique.

L'invention permet ainsi de limiter le nombre d'éléments indicateurs portés directement par l'utilisateur ou avec lesquels il doit interagir.

Les inventeurs ont ainsi pu mettre au point un dispositif robotique fonctionnant sans capteur porté directement par l'utilisateur, en particulier sans capteur biométrique, et également sans interface utilisateur/environnement à travers laquelle l'utilisateur identifiait traditionnellement le niveau d'assistance que le dispositif robotique devait lui apporter.

L'invention rend donc l'assistance au mouvement plus ergonomique pour l'utilisateur.

En outre, l'invention peut être utilisée pour des applications relativement complexes. Il peut ainsi être envisagé d'utiliser l'invention dans un environnement inconnu.

De plus, le calculateur effectue un apprentissage automatique d'au moins un mouvement réalisé par le dispositif robotique et l'apprentissage automatique est effectué lors du mode par défaut et/ou l'apprentissage automatique est effectué lors d'une phase préliminaire dédiée.

En variante ou en complément, le calculateur pourra également intégrer une base de données intégrant une liste prédéterminée de modèles de mouvements réalisés par le dispositif robotique en asservissement en effort.

Ainsi, le basculement entre les deux modes d'asservissement devient ainsi de plus en plus fréquent à mesure que le calculateur apprend les mouvements possibles du dispositif robotique rendant le dispositif robotique de plus en plus performant avec le temps.

Selon un mode de réalisation particulier, l'asservissement en trajectoire est une suite d'asservissements en position.

Selon un mode de réalisation particulier, l'asservissement en trajectoire est un asservissement en vitesse.

Selon un mode de réalisation particulier, le dispositif robotique est un exosquelette.

L'invention concerne également un dispositif robotique comprenant un calculateur configuré pour asservir en effort le dispositif robotique, le calculateur étant agencé pour, lors d'une reconnaissance d'un mouvement effectué par le dispositif robotique, asservir en trajectoire le dispositif robotique tout en enregistrant au moins un effort exercé par un environnement externe sur le dispositif robotique, afin, lors d'un retour à l'asservissement en effort, de s'aider de cet enregistrement pour assurer l'asservissement en effort.

D'autres caractéristiques et avantages de l'invention ressortiront à la lecture de la description qui suit d'un mode de réalisation particulier non limitatif de l'invention.

### BREVE DESCRIPTION DES DESSINS

L'invention sera mieux comprise à la lumière de la description qui suit en référence aux figures annexées cijointes parmi lesquelles :
- la figure 1 est une vue schématique d'un dispositif robotique selon un mode de réalisation particulier de l'invention,
- la figure 2 illustre schématiquement le passage entre les deux modes de fonctionnement du dispositif illustré à la figure 1,
- la figure 3a illustre schématiquement le dispositif illustré à la figure 1 lorsqu'il fonctionne en mode par défaut, et
- la figure 3b illustre schématiquement le dispositif illustré à la figure 1 lorsqu'il fonctionne en mode de mesure.

### DESCRIPTION DETAILLEE DE L'INVENTION

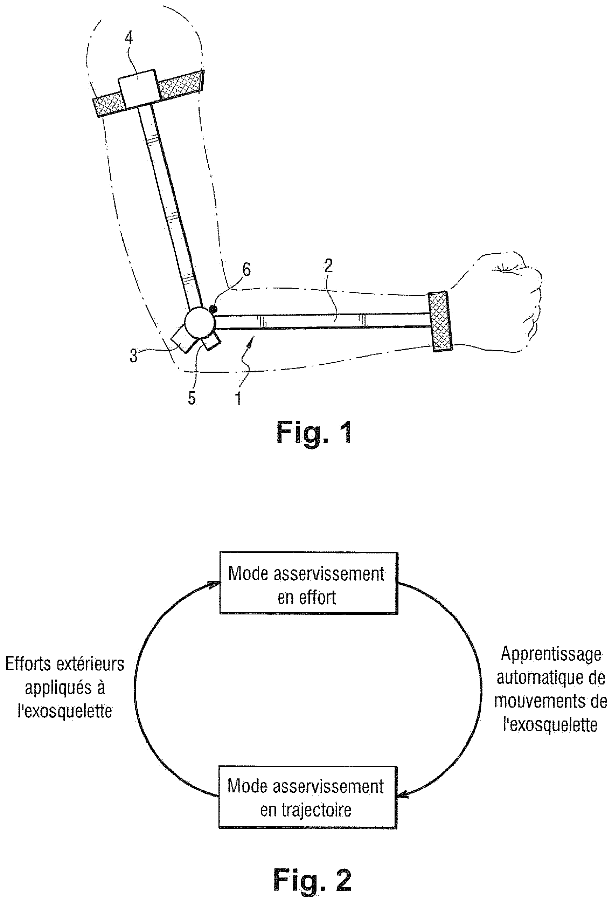

En référence à la figure 1, le procédé selon un mode de réalisation particulier est ici mis en œuvre dans un exosquelette 1.

Cette application n'est bien entendu pas limitative et on pourra mettre en œuvre le procédé dans tout type de dispositif robotique, comme par exemple un robot de comanipulation, un système de guidage d'un aéronef ou tout autre moyen de transport... Le dispositif pourra également être un système de visée avec suivi d'une cible. En complément ou en remplacement d'un suivi par traitement d'images, ledit système pourra ainsi s'aider des efforts appliqués par l'utilisateur sur un organe de guidage (comme un manche, un joystick ...) pour assurer le suivi de la cible. Par exemple, dès qu'une trajectoire de l'organe de guidage peut être reconnue par le calculateur, ledit calculateur passe en mode de calcul pour déterminer les efforts exercés sur l'organe de guidage. Le dispositif robotique (ou robot) pourra ainsi être conformé pour fournir un effort additionnel à l'utilisateur afin de compenser les efforts requis pour interagir avec des objets et/ou réaliser des efforts musculaires fatigants et/ou pénibles.

L'exosquelette 1 comporte ici de manière connue en soi :
- une structure mécanique 2 à un ou plusieurs degrés de liberté qui est portée par l'utilisateur,
- un ou des actionneurs 3 associés à la structure mécanique 2 pour permettre le déplacement de la structure mécanique 2 selon le ou les degrés de liberté de la structure mécanique 2, et

- un calculateur 4 assurant la commande des actionneurs 3.

Les actionneurs 3 sont par exemple des moteurs.

Selon un mode de réalisation particulier, l'exosquelette 1 comporte en outre au moins un capteur de trajectoire 5 (pour estimer la position et/ou la vitesse de déplacement de la structure mécanique 2). Le capteur de trajectoire 5 est par exemple un capteur de position angulaire. Le capteur de trajectoire 5 est ici agencé au niveau de la liaison pivot entre deux éléments articulés de la structure mécanique 2 afin de mesurer la position angulaire relative de l'un des éléments par rapport à l'autre.
De préférence, l'exosquelette 1 comporte également au moins un capteur d'effort 6 (pour estimer un ou des efforts (couple et/ou force) appliqués à la structure mécanique 2). Ledit capteur 6 est par exemple un capteur de couple. Il est ici situé entre l'actionneur 3 permettant le pivotement entre les deux éléments articulés de la structure mécanique 2 et la structure mécanique 2 elle-même.

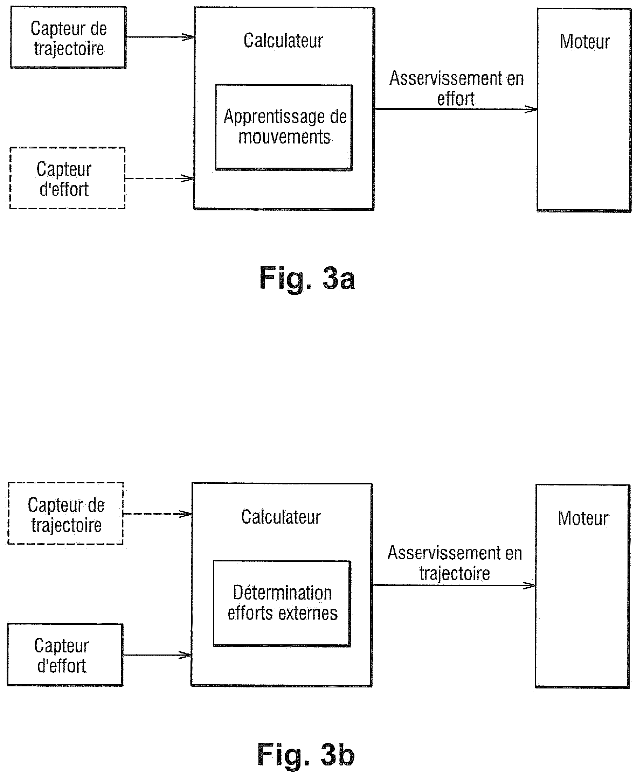

En référence aux figures 2, 3a et 3b, l'exosquelette 1 est configuré pour pouvoir fonctionner selon deux modes différents, un mode par défaut et un mode de mesure.

Dans le mode par défaut, le calculateur 4 assure un asservissement en effort de l'exosquelette 1. Par « effort » on entend que l'asservissement est tout aussi bien un asservissement en force qu'un asservissement en couple.

De préférence, dans ce mode par défaut, le calculateur 4 réalise simultanément un apprentissage automatique du ou des mouvements réalisés par l'exosquelette 1, qui sont donc liés à ceux de l'utilisateur.

On rappelle que l'apprentissage automatique (pour « machine learning » en anglais) est une méthode permettant d'évoluer par un processus systématique, en place de l'utilisation d'algorithmes classiques trop limités pour remplir la tâche visée. Ce type d'apprentissage est bien connu de l'homme du métier et ne sera donc pas détaillé ici.

Typiquement, le calculateur 4 enregistre dans une base de données des modèles de mouvements réalisés par l'exosquelette 1 pendant l'asservissement en effort (par exemple lorsque le couple appliqué sur l'utilisateur par l'exosquelette 1 est égal à zéro).

En ce qui concerne le mode de mesure, le calculateur 4 asservit l'exosquelette 1 en trajectoire. Par « trajectoire » on entend que l'asservissement est tout aussi bien une suite d'asservissements en position (angulaire ou non) qu'un asservissement en vitesse (par exemple en suivant une courbe de vitesse). On préfère ici asservir en une suite d'asservissements en position l'exosquelette 1.

Il convient de noter que l'on parle ici de suite d'asservissements en position du fait que l'on cherche à faire reproduire un mouvement à l'exosquelette 1, mouvement qui est donc défini par une succession de positions.

Simultanément, dans le mode de mesure, le calculateur 4 enregistre le ou les efforts exercés sur l'exosquelette 1 par l'environnement extérieur à l'exosquelette 1 pour réinjecter ultérieurement cette donnée dans l'asservissement en effort lors du basculement en mode par défaut.

On note que dans ce mode de mesure, le calculateur 4 prévoit le mouvement de l'utilisateur et asservit en position de manière correspondante l'exosquelette 1. Ceci permet de réduire au maximum l'impact direct de l'utilisateur sur la mesure des efforts exercés sur l'exosquelette 1 par l'environnement extérieur à l'exosquelette 1.

De préférence, dans ce mode de mesure, on enregistre dans le calculateur 4 au moins un effort exercé sur l'exosquelette 1 par un environnement externe audit exosquelette 1 si l'on connait la direction dudit effort et au moins deux efforts pour déterminer cette direction si l'on ne la connait pas. En réalité, lesdits au moins deux efforts résultent de l'action d'un même objet sur l'exosquelette 1 mais mesurée à des instants différents : l'exosquelette 1 ayant bougé entre ces deux instants, l'effort aura évolué entretemps d'où la notion de « deux efforts ». En comparant les mesures d'effort effectuées à deux instants différents, le calculateur 4 peut ainsi estimer la résultante et la direction de l'action exercée par l'objet sur l'exosquelette 1.

Le fonctionnement de l'exosquelette 1 va être à présent décrit.

A l'état initial, l'exosquelette 1 est en dans son mode par défaut. L'exosquelette 1 assiste ainsi l'utilisateur dans l'exécution de ses tâches de par son asservissement en effort. Simultanément, le calculateur 4 apprend automatiquement les mouvements effectués par l'exosquelette 1 et les enregistre dans sa base de données.

Lorsque le calculateur 4 détermine qu'un mouvement effectué par l'exosquelette 1 correspond à un mouvement que le calculateur 4 a déjà appris et enregistré, le calculateur 4 provoque le basculement en mode de mesure. Typiquement les signaux fournis par le capteur de trajectoire 5 sont traités par le calculateur 4 : lorsqu'un des signaux correspond à un signal connu du calculateur 4, ledit calculateur 4 bascule l'exosquelette 1 en mode de mesure.

Le calculateur 4 extrapole également en continu la suite du signal reçu, grâce à un ou des modèles de mouvements contenus dans sa base de données, pour estimer le mouvement qu'est censé effectuer l'exosquelette 1. A partir de ce mouvement présumé de l'exosquelette 1, le calculateur 4 assure un asservissement en trajectoire de l'exosquelette 1.

Lors du basculement dans le mode de mesure c'est donc l'exosquelette 1 qui provoque le mouvement et non plus l'utilisateur. Dès lors l'exosquelette 1 supporte seul le ou les efforts appliqués sur l'exosquelette 1 par l'environnement extérieur. Comme indiqué ci-dessus, on considère que les efforts directement exercés par l'utilisateur sur l'exosquelette 1 dans le mode de mesure sont négligeables (grâce à l'apprentissage automatique l'asservissement en trajectoire compense en effet l'effort musculaire de l'utilisateur).

Les données alors fournies par le capteur d'effort 6 sont ainsi significatives du ou des efforts que l'exosquelette 1 doit appliquer seul sur l'environnement pour pouvoir suivre la trajectoire imposée par le calculateur 4. A partir des données fournies par le capteur d'effort 6, le calculateur 4 déduit ainsi le ou les efforts exercés par l'environnement extérieur sur l'exosquelette 1 et que l'exosquelette 1 doit compenser.

Par exemple, si l'utilisateur porte un objet lourd sans fournir d'effort musculaire, son bras tend à se déplier, mais en réalité l'exosquelette 1 va retenir son bras dans le mode de mesure grâce à l'action des actionneurs 3. Par un effet de « micro-torsion » au niveau du capteur 6, on mesure ainsi le couple induit par l'objet porté.

Une fois cette détermination effectuée, le calculateur 4 provoque le basculement dans le mode par défaut. L'effort de l'utilisateur vient de nouveau s'additionner à celui de l'exosquelette 1. Le calculateur 4 s'aide alors de la détermination du ou des efforts exercés par l'environnement extérieur sur l'exosquelette 1 déterminés au cours du fonctionnement dans le mode de mesure pour assurer l'asservissement en effort et compenser si besoin le ou les efforts exercés par l'environnement extérieur sur l'exosquelette 1. Plus précisément, si l'effort mesuré pendant le mode de mesure est différent de celui estimé dans le mode par défaut, on augmente les efforts exercés par le ou les actionneurs 3 (en ajustant leurs puissances) pour se rapprocher de l'effort mesuré dans le mode de mesure. Lors de la mise en marche de l'exosquelette 1, on considère pour le mode par défaut qu'aucun effort n'est exercé par l'environnement extérieur sur l'exosquelette 1.

L'exosquelette 1 fonctionne alors dans son mode par défaut jusqu'à détection d'un mouvement connu par le calculateur 4.

Un exemple de fonctionnement est le portage d'un objet.

Lors de la reconnaissance par le calculateur 4 du mouvement de l'utilisateur signifiant qu'il s'apprête à saisir un objet ou qu'il saisit un objet, le calculateur 4 bascule en mode de mesure.

Le calculateur 4 mesure alors l'effort que doit exercer seul l'exosquelette 1 pour porter l'objet (puisque grâce à l'apprentissage automatique l'asservissement en trajectoire compense l'effort musculaire de l'utilisateur) et en déduit la masse de l'objet.

On rebascule alors en mode par défaut et le calculateur 4 s'aide de la masse mesurée de l'objet pour assurer un asservissement en effort adéquat.

Bien entendu il s'agit d'un exemple particulier de fonctionnement. De manière plus générale, le calculateur 4 peut provoquer le basculement dans le mode de mesure pour d'autres mouvements comme par exemple le fait de pousser ou de tirer un objet. Le calculateur 4 cherchera alors à mesurer la force et la direction de cette force exercée par l'objet sur l'exosquelette 1.

Le calculateur 4 provoque ainsi de manière régulière le passage d'un mode de fonctionnement à un autre assurant une assistance aux mouvements de l'utilisateur de manière précise, dynamique et adaptée dans le temps. Selon un mode de réalisation particulier, le calculateur 4 est configuré pour basculer en mode de mesure à chaque reconnaissance par le calculateur 4 d'un mouvement appris par ledit calculateur 4.

De façon avantageuse, le fonctionnement dans le mode de mesure ne dure qu'un court instant, typiquement entre 0.3 et 3.5 secondes, et de préférence entre 0.5 et 3 secondes, juste le temps de la détermination des efforts extérieurs exercés. Ceci permet de rendre le fonctionnement en mode de mesure peu, voire pas, perceptible pour l'utilisateur. On rend ainsi l'exosquelette 1 plus ergonomique pour l'utilisateur. En outre, ceci permet de ne pas avoir à prédire le mouvement de l'utilisateur durant une phase trop importante.

On note que l'exosquelette 1 ainsi décrit ne comporte que deux capteurs, l'un pour le mouvement et l'autre pour les efforts.

En outre, l'exosquelette 1 ainsi décrit fonctionne sans interface utilisateur/environnement à travers laquelle l'utilisateur identifie le niveau d'assistance que doit lui apporter l'exosquelette 1. De plus, l'exosquelette 1 ainsi décrit fonctionne sans capteur porté directement par l'utilisateur, en particulier sans capteur biométrique.

L'exosquelette 1 ainsi décrit s'avère donc particulièrement ergonomique.

Par ailleurs, l'exosquelette 1 peut fonctionner même si l'utilisateur progresse dans un environnement inconnu. Par exemple la masse des objets à porter n'a pas besoin d'être prédéterminée pour que l'exosquelette 1 puisse fonctionner.

En particulier, bien qu'ici dans le mode par défaut le calculateur effectue un apprentissage automatique d'au moins un mouvement réalisé par le dispositif robotique en cours de fonctionnement du dispositif robotique, en variante ou en complément, le calculateur pourra effectuer un apprentissage automatique d'au moins un mouvement réalisé par le dispositif robotique lors d'une phase dédiée d'apprentissage (le dispositif robotique étant alors uniquement utilisé pour l'apprentissage du calculateur et non pour assister un utilisateur dans ses tâches). En variante ou en complément, le calculateur pourra également intégrer une base de données intégrant une liste prédéterminée de modèles de mouvements réalisés par le dispositif robotique en asservissement en effort.

En outre, le dispositif pourra comporter ou être associé à un plus grand nombre de capteurs d'effort et/ou de trajectoires que ce qui a été indiqué. On cherchera toutefois à limiter le nombre d'éléments indicateurs pour des questions de coût, de faisabilité, d'ergonomie, de maintenance ...

Bien qu'ici tout soit embarqué par le dispositif robotique, une partie des éléments (comme par exemple une alimentation énergétique du dispositif ...) pourra être déporté du dispositif.

Bien que le dispositif soit apte à fonctionner sans capteur porté directement par l'utilisateur, l'utilisateur pourra porter des capteurs par exemple pour des questions de redondance en cas de défaillance du dispositif.

## Revendications

1. Procédé d'assistance d'au moins un mouvement d'un utilisateur par l'intermédiaire d'un dispositif robotique (1), le dispositif robotique fonctionnant sans capteur porté directement par l'utilisateur comme un capteur biométrique ou une interface utilisateur/environnement à travers laquelle l'utilisateur identifie un niveau d'assistance à lui apporter, le procédé permettant de faire fonctionner le dispositif robotique au moins dans les deux modes suivants :
- Mode par défaut : asservissement en effort du dispositif robotique via un calculateur (4) du dispositif robotique,
- Mode de mesure : asservissement en trajectoire du dispositif robotique, via le calculateur, et enregistrement dans le calculateur d'au moins un effort exercé sur le dispositif robotique par un environnement externe audit dispositif robotique,
le procédé étant défini pour,
lors d'une reconnaissance par le calculateur d'un mouvement effectué par le dispositif robotique, déjà appris et enregistré par le calculateur, basculer du mode par défaut au mode de mesure pour enregistrer au moins un effort exercé sur le dispositif robotique par un environnement extérieur au dispositif robotique, puis
revenir au mode par défaut en s'aidant dudit effort enregistré pour mettre en œuvre l'asservissement en effort dudit mode par défaut,
dans lequel
• le calculateur (4) effectue un apprentissage automatique d'au moins un mouvement réalisé par le dispositif robotique, l'apprentissage automatique étant effectué lors du mode par défaut et/ou l'apprentissage automatique étant effectué lors d'une phase préliminaire dédiée ; et/ou
• dans lequel le calculateur intègre une base de données intégrant une liste prédéterminée de modèles de mouvements réalisés par le dispositif robotique en asservissement en effort.

2. Procédé selon la revendication 1, lequel l'asservissement en trajectoire est une succession d'asservissements en position.

3. Procédé selon l'une des revendications 1 à 2, dans lequel l'asservissement en trajectoire est un asservissement en vitesse.

4. Procédé selon l'une des revendications précédentes, dans lequel le dispositif robotique est un exosquelette.

5. Dispositif robotique (1) comprenant un calculateur (4) configuré pour asservir en effort le dispositif robotique, le calculateur étant agencé pour, lors d'une reconnaissance d'un mouvement effectué par le dispositif robotique déjà appris et enregistré par le calculateur, asservir en trajectoire le dispositif robotique tout en enregistrant au moins un effort exercé par un environnement externe sur le dispositif robotique, afin, lors d'un retour à l'asservissement en effort, de s'aider de cet enregistrement pour assurer l'asservissement en effort, le dispositif robotique fonctionnant sans capteur porté directement par l'utilisateur comme un capteur biométrique ou une interface utilisateur/environnement à travers laquelle l'utilisateur identifie un niveau d'assistance à lui apporter, dans lequel :
• le calculateur (4) est configuré pour effectuer un apprentissage automatique d'au moins un mouvement réalisé par le dispositif robotique, l'apprentissage automatique étant effectué lors du mode par défaut et/ou l'apprentissage automatique étant effectué lors d'une phase préliminaire dédiée ;
Et/ou
• dans lequel le calculateur intègre une base de données intégrant une liste prédéterminée de modèles de mouvements réalisés par le dispositif robotique en asservissement en effort.

## Patentansprüche

1. Verfahren zur Unterstützung von mindestens einer Bewegung eines Benutzers mittels einer Robotervorrichtung (1), wobei die Robotervorrichtung ohne einen Sensor funktioniert, der direkt von dem Benutzer getragen wird, wie z. B. ein biometrischer Sensor, oder ohne eine Schnittstelle Benutzer/Umgebung, durch die der Benutzer eine Höhe der Unterstützung, die er erhalten soll, identifiziert, wobei das Verfahren ermöglicht, die Robotervorrichtung mindestens in den beiden folgenden Modi zu betreiben:
- Standardmodus: Kraftregelung der Robotervorrichtung über einen Rechner (4) der Robotervorrichtung,
- Messmodus: Bahnregelung der Robotervorrichtung über den Rechner und Speicherung mindestens einer Kraft, die auf die Robotervorrichtung von einer Umgebung außerhalb der Robotervorrichtung ausgeübt wird, in dem Rechner,
wobei das Verfahren definiert ist, um
während einer Wiedererkennung einer von der Robotervorrichtung ausgeführten Bewegung, die bereits gelernt und vom Rechner gespeichert wurde, durch den Rechner von dem Standardmodus in den Messmodus umzuschalten, um mindestens eine Kraft zu speichern, die auf die Robotervorrichtung von einer Umgebung außerhalb der Robotervorrichtung ausgeübt wird, und dann
in den Standardmodus zurückzukehren, während die gespeicherte Kraft genutzt wird, um die Kraftregelung des Standardmodus durchzuführen, wobei
• der Rechner (4) ein automatisches Lernen mindestens einer Bewegung durchführt, die von der Robotervorrichtung ausgeführt wird, wobei das automatische Lernen während des Standardmodus erfolgt und/oder wobei das automatische Lernen während einer dafür vorgesehenen vorbereitenden Phase erfolgt;
und/oder
• wobei der Rechner eine Datenbank integriert, die eine vorbestimmte Liste von Bewegungsmodellen integriert, die von der Robotervorrichtung bei Kraftregelung ausgeführt werden.

2. Verfahren nach Anspruch 1, bei dem die Bahnregelung eine Abfolge von Positionsregelungen ist.

3. Verfahren nach einem der Ansprüche 1 bis 2, bei dem die Bahnregelung eine Geschwindigkeitsregelung ist.

4. Verfahren nach einem der vorhergehenden Ansprüche, bei dem die Robotervorrichtung ein Exoskelett ist.

5. Robotervorrichtung (1), umfassend einen Rechner (4), der konfiguriert ist, um eine Kraftregelung der Robotervorrichtung durchzuführen, wobei der Rechner ausgebildet ist, um während einer Wiedererkennung einer von der Robotervorrichtung ausgeführten Bewegung, die bereits gelernt und von dem Rechner gespeichert wurde, eine Bahnregelung der Robotervorrichtung durchzuführen, während mindestens eine Kraft gespeichert wird, die von einer äußeren Umgebung auf die Robotervorrichtung ausgeübt wird, um während einer Rückkehr zur Kraftregelung diese Speicherung zu nutzen, um die Kraftregelung sicherzustellen, wobei die Robotervorrichtung ohne einen Sensor funktioniert, der direkt von einem Benutzer getragen wird, wie z. B. ein biometrischer Sensor, oder ohne eine Schnittstelle Benutzer/Umgebung, durch die der Benutzer eine Höhe der Unterstützung, die er erhalten soll, identifiziert, wobei:
• der Rechner (4) konfiguriert ist, um ein automatisches Lernen mindestens einer von der Robotervorrichtung ausgeführten Bewegung durchzuführen, wobei das automatische Lernen während des Standardmodus erfolgt und/oder wobei das automatische Lernen während einer dafür vorgesehenen vorbereitenden Phase erfolgt;
und /oder
• wobei der Rechner eine Datenbank integriert, die eine vorbestimmte Liste von Bewegungsmodellen integriert, die von der Robotervorrichtung bei Kraftregelung ausgeführt werden.

## Claims

1. A method of assisting at least one movement of a user by means of a robotic device (1), the robotic device operating without the user wearing directly any sensor, such as a biometric sensor, and without any user/environment interface for the user to identify a level of assistance that is to be provided, the method enabling the robotic device to be caused to operate in at least the following two modes:
• default mode: force servocontrol of the robotic device via a computer (4) of the robotic device; and
• measurement mode: path servocontrol of the robotic device, via the computer, with the computer storing at least one force exerted on the robotic device by an environment external to said robotic device;
the method being defined:
• during recognition by the computer of a movement performed by the robotic device, as already learnt and stored by the computer, to switch from default mode to measurement mode in order to store at least one force exerted on the robotic device by an environment external to the robotic device; and then
• to return to default mode while making use of said stored force to perform the force servocontrol in said default mode,
wherein
• the computer (4) performs automatic learning of at least one movement carried out by the robotic device, the automatic learning being performed during default mode and/or the automatic learning being performed during a dedicated preliminary stage;
and/or
• wherein the computer includes a database containing a predetermined list of models of movements performed by the robotic device under force servocontrol.

2. A method according to claim 1, wherein the path servocontrol is servocontrol via a succession of positions.

3. A method according to any one of claims 1 to 2, wherein the path servocontrol is velocity servocontrol.

4. A method according to any preceding claim, wherein the robotic device is an exoskeleton.

5. A robotic device (1) comprising a computer (4) configured to provide force servocontrol of the robotic device, the computer being arranged, during recognition of a movement carried out by the robotic device as already learnt and stored by the computer, to provide the robotic device with path servocontrol while storing at least one force exerted by an external environment on the robotic device so that, on returning to force servocontrol, it can make use of the stored force(s) to perform force servocontrol, the robotic device operating without the user wearing directly any sensor, such as a biometric sensor, and without any user/environment interface for the user to identify a level of assistance that is to be provided, wherein :
• the computer (4) is arranged to perform automatic learning of at least one movement carried out by the robotic device, the automatic learning being performed during default mode and/or the automatic learning being performed during a dedicated preliminary stage;
and/or
• wherein the computer includes a database containing a predetermined list of models of movements performed by the robotic device under force servocontrol.
